# EUROPÄISCHE PATENTSCHRIFT

(11) **EP 3 560 679 B1**
(45) Veröffentlichungstag und Bekanntmachung des Hinweises auf die Patenterteilung: **17.03.2021**
(21) Anmeldenummer: 19180830.2
(22) Anmeldetag: 18.11.2015
(51) Int. Cl.: B29C 49/08, B29C 49/78, B29C 49/06, B29C 49/12, B29C 49/36, B29K 105/00, B29L 31/00

(54) **VERFAHREN ZUM INBETRIEBNEHMEN EINER BLASFORMMASCHINE UND ANLAGE MIT EINER BLASFORMMASCHINE**
METHOD FOR COMMISSIONING A BLOW-MOULDING MACHINE AND INSTALLATION WITH A BLOW MOULDING MACHINE
PROCÉDÉ DE MISE EN SERVICE D'UNE MACHINE DE FORMAGE PAR SOUFFLAGE ET INSTALLATION COMPRENANT UNE MACHINE DE FORMAGE PAR SOUFFLAGE

(30) Priorität: 18.11.2014 DE 102014116891
(43) Veröffentlichungstag der Anmeldung: 30.10.2019
(62) Teilanmeldung aus: 15195119.1
(73) Patentinhaber: Krones AG, 93073 Neutraubling (DE)
(72) Erfinder: Haller, Markus, 93073 Neutraubling (DE)
(74) Vertreter: Bittner, Bernhard

(56) Entgegenhaltungen:
- EP-A1- 1 777 056
- US-A1- 2008 211 125
- US-A1- 2012 226 376
- US-A1- 2013 231 772

## Beschreibung

Die vorliegende Erfindung bezieht sich auf ein Verfahren für die Inbetriebnahme und/oder den Betrieb einer Blasformmaschine sowie eine entsprechende Anlage mit einer Blasformmaschine. Aus dem Stand der Technik ist es bekannt, dass mittels Blasformmaschinen und insbesondere Streckblasmaschinen Kunststoffvorformlinge durch Beaufschlagung mit Druckluft expandiert werden und so zu Behältern, wie insbesondere Flaschen, umgeformt werden. Dabei werden die Kunststoffvorformlinge üblicherweise mittels Umformungsstationen transportiert und während dieses Transports mit einem fließfähigen Medium und insbesondere mit Blasluft zu ihrer Expansion beaufschlagt. Zur optimalen Durchführung dieses Blasformprozesses sind dabei viele unterschiedliche Prozessparameter zu beachten. Üblicherweise werden derartige Prozessparameter von einem Bediener vorgegeben oder teilweise während der Produktion mittels eines Regelungsverfahrens angepasst.

Die Dokumente US2008/211125A1, US2012/226376A1, US2013/231772A1 und EP1777056A1 beschreiben gattungsgemäße Verfahren und Vorrichtungen aus dem Stand der Technik.

Bei einem aus dem internen Stand der Technik der Anmelderin bekannten Verfahren werden geschlossene Regelkreise eingesetzt. Dabei werden während der Produktion Prozessgrößen erfasst und nach einem Regelalgorithmus wird eine bestimmte Regelgröße einer von dem Bediener einzustellenden Führungsgröße nachgeregelt. Damit erfordert das aus dem Stand der Technik bekannte Verfahren stets ein Nachregeln während des Produktionsbetriebes. Daneben ist für den Benutzer die Vorgabe von den einzelnen Parametern relativ aufwendig, da er auch Beziehungen zwischen diesen Regelgrößen beachten muss.

Ein Maschinenbediener muss daher eine Vielzahl von Parametern beherrschen, wobei Wechselwirkungen zwischen manchen dieser Parameter bestehen. Auch bei geregelten Parameterwerten müssen sinnvolle Initialwerte sowie Regelparameter festgelegt werden.

Der vorliegenden Erfindung liegt daher die Aufgabe zugrunde, die Einrichtung bzw. Inbetriebnahme derartiger Vorrichtungen zum Umformen von Kunststoffvorformlingen zu Kunststoffbehältnissen zu vereinfachen. Diese Aufgabe wird erfindungsgemäß durch ein Verfahren und eine Maschinenanordnung nach den unabhängigen Patentansprüchen erreicht. Vorteilhafte Ausführungsformen und Weiterbildungen sind Gegenstand der Unteransprüche.

Bei einem erfindungsgemäßen Verfahren zum Betreiben einer Vorrichtung zum Umformen von Kunststoffvorformlingen zu Kunststoffbehältnissen, wobei diese Vorrichtung Kunststoffvorformlinge mit einem fließfähigen Medium beaufschlagt, um diese Kunststoffvorformlinge zu den Kunststoffbehältnissen zu expandieren, führt diese Vorrichtung diesen Umformungsvorgang unter Berücksichtigung einer Vielzahl von Prozessparametern durch.

Erfindungsgemäß wird die Vielzahl der Prozessparameter anhand eines Maschinenmodells ermittelt, wobei diesem Maschinenmodell eine vorgegebene Anzahl an Eingabeparametern übergeben wird und wenigstens eine Prozessoreinheit auf Basis dieser Eingabeparameter die Prozessparameter und/oder für diese Prozessparameter charakteristische Werte ermittelt.

Wie oben erwähnt, mussten im Stand der Technik von einem Benutzer sämtliche Parameter festgelegt und direkt an die Maschine übergeben werden. Die Erfindung schlägt nunmehr vor, dass nicht mehr alle Parameter durch den Benutzer selbst festgelegt und an die Maschine übergeben werden, sondern stattdessen teilweise in ein Maschinenmodell übergeben werden und dieses die übrigen Prozessparameter ermittelt. Die Blasmaschine muss also nicht mehr "online" während des Produktionsprozesses nachgeregelt werden, sondern ist selbstregelnd. So ist es bevorzugt möglich, dass anhand eines mathematischen Modells des gesamten pneumatischen Maschinensystems der Blasmaschine eine Vielzahl der Prozessparameter bereits bei Eingabe einiger weniger Prozessparameter und besonders bevorzugt bereits vor Produktionsbeginn errechnet und/oder eingestellt wird.

Bevorzugt erfolgt eine qualitative und quantitative Ermittlung von Systemgrößen des pneumatischen Systems bzw. der Vorrichtung zum Umformen von Kunststoffvorformlingen zu Kunststoffbehältnissen. Da - wie oben erwähnt - eine exakte analytische Berechnung eines einzelnen pneumatischen Systems jeweils sehr aufwendig ist und mit großer Unsicherheit behaftet ist, wird vorgeschlagen, dass das Systemverhalten empirisch ermittelt wird und insbesondere empirisch anhand eines Versuchsaufbaus. Damit wird bevorzugt auf Basis dieses Versuchsaufbaus das Maschinenmodell ermittelt bzw. zur Verfügung gestellt. Bevorzugt weist der Versuchsaufbau charakteristische Größen bzw. Merkmale auf, welche auch für die Inbetriebnahme der Maschine charakteristisch sind.

Vorteilhaft wird bei der Beaufschlagung der Kunststoffvorformlinge mit mehreren Druckstufen gearbeitet. Vorteilhaft wird wenigstens mit zwei Druckstufen gearbeitet, nämlich insbesondere einem Vorblasdruck und einem Fertigblasdruck. Für diese Beaufschlagung mit den unterschiedlichen Drücken werden besonders bevorzugt Zeiten vorgegeben. So ist es möglich, dass zunächst das Behältnis mit einem Vorblasdruck beaufschlagt wird und anschließend mit einem Fertigblasdruck.

Bevorzugt wird die Berechnung der jeweiligen Prozessparameter nicht an der Maschine selbst, sondern an einem Maschinenmodell durchgeführt. Auf diese Weise kann die Berechnung der Prozessdaten außerhalb des Maschinenbetriebs durchgeführt werden.

Bei einem weiteren bevorzugten Verfahren wird das Systemverhalten an einem Versuchsaufbau ermittelt. Dieser Versuchsaufbau kann dabei in Teilen mit der tatsächlich einzurichtenden bzw. in Betrieb zu nehmenden Maschine übereinstimmen.

Bei einem weiteren bevorzugten Verfahren ist die Anzahl der Prozessparameter größer als die Anzahl der Eingabeparameter. Dies bedeutet, dass dem Modell lediglich eine vorgegebene Anzahl an Eingabeparametern vorgegeben wird und dieses dann zusätzlich noch weitere Prozessparameter ermittelt. Vorteilhaft bildet der Versuchsaufbau die reale Maschine ab. Daneben kann es sich auch bei wenigstens einem und bevorzugt bei mehreren Eingabeparametern um Prozessparameter der Maschine handeln.

Während also im Stand der Technik während der Produktion Prozessgrößen erfasst werden und eine bestimmte Regelgröße nachgeregelt wird, wird hier vorgeschlagen, dass die Prozessparameter anhand weniger Prozessparameter ermittelt werden, welche der Bediener allein zur Anpassung an das jeweilige konkrete Produkt bzw. die jeweilige konkrete Maschine variiert.

Dabei wird vorteilhaft zwischen wenigstens zwei Typen von Prozessparametern unterschieden, welche im Folgenden als Hauptprozessparameter und als Nebenprozessparameter bezeichnet werden. Bei den Hauptprozessparametern handelt es sich bevorzugt um Parameter, welche einen bedeutenden bzw. großen Einfluss auf das Ergebnis des Blasprozesses bzw. des Streckblasprozesses haben, wie beispielsweise der Beginn eines Vorblasens, das Ende eines Vorblasens und/oder der Beginn eines Zwischenblasens oder der Vorblasdruck oder der Fertigblasdruck. Bei den Nebenprozessparametern handelt es sich bevorzugt um Prozessparameter, die keinen bzw. nur einen geringen Einfluss auf das Ergebnis des Streckblasprozesses haben.

Bei einem weiteren bevorzugten Verfahren beaufschlagt die Vorrichtung die Behältnisse nicht nur mit einem oder mehreren Blasdrücken, sondern bewirkt zusätzlich auch eine Dehnung der Kunststoffvorformlinge in ihrer Längsrichtung. Zu diesem Zwecke werden in die Kunststoffvorformlinge Reckstangen eingeführt, welche diese in ihrer Längsrichtung dehnen.

Bei einem weiteren bevorzugten Verfahren enthalten die Eingabeparameter Hauptprozessparameter, welche den Streckblasvorgang beschreiben. Hierbei handelt es sich insbesondere um die oben bereits erwähnten wichtigen Kenngrößen des Streckblasprozesses. Insbesondere handelt es sich bei diesen Hauptprozessparametern um zeitliche Werte und/oder um Druckwerte.

Bei einem weiteren bevorzugten Verfahren enthalten die Eingabeparameter Behältnisparameter, welche für die zu expandierenden Kunststoffvorformlinge und/oder die herzustellenden Kunststoffbehältnisse charakteristisch sind. Dabei kann es sich beispielsweise um ein Volumen der herzustellenden Behältnisse handeln oder auch um eine Einstellung einer Drossel für einen Vorblasvorgang oder ein Material des Kunststoffvorformlings oder um eine Ausgestaltung eines Mündungsbereichs des Kunststoffvorformlings. Damit handelt es sich bevorzugt bei diesen Eingabeparametern um produktabhängige Konstanten.

Bei einem weiteren bevorzugten Verfahren ermittelt die Prozessoreinheit auf Basis der Eingabeparameter Nebenprozessparameter, welche ebenfalls den Streckblasvorgang beschreiben. Bei diesen Nebenprozessparametern handelt es sich - wie oben erwähnt - um solche Parameter, die den Streckblasvorgang weniger beeinflussen als die Hauptprozessparameter. So können beispielsweise durch derartige Nebenprozessparameter Grenzwerte ermittelt werden, etwa Maximal- und Minimalwerte.

Damit wird besonders bevorzugt auf Basis der produktabhängigen Parameter und der Hauptprozessparameter eine Berechnung der Nebenprozessparameter durchgeführt. Dabei kann es sich beispielsweise bei den Nebenprozessparametern um solche Parameter handeln, welche für ein Recycling von Blasluft verantwortlich sind. Bevorzugt wird bei dem hier beschriebenen Verfahren ein Recycling von Blasluft vorgenommen, d.h. es wird Blasluft in Druckluftreservoirs zurückgeleitet, und insbesondere solche Druckluftreservoirs, welche einen geringeren Druck an Blasluft zur Verfügung stellen.

Bevorzugt wird außerhalb des Arbeitsbetriebs ein Versuchsaufbau erstellt, der die pneumatischen Eigenschaften der zu betreibenden Maschine abbildet. Im Weiteren können Messreihen durchgeführt werden, wobei beispielsweise gezielt eine bestimmte (z.B. eine erklärende) Größe geändert wurde und der Einfluss weiterer Größen hierauf untersucht wird. So kann beispielsweise untersucht werden, wie sich eine Änderung des Behältnisvolumens, eine Änderung des Vordrucks in dem Behältnis, eine Änderung des Blasdrucks, eines Reckstangendurchmessers, eine Reckstangenfunktion oder aber eine Drosselstellung eines Vorblasventils auf andere Größen auswirken. Dabei ist es möglich, dass in einem Versuchsaufbau Druck jeweils über vorhandene Ventile für das Vorblasen, Zwischenblasen und Fertigblasen zugeführt wird. Daneben kann für die hier beschriebenen Größen auch der Entlastungsvorgang untersucht werden, d.h. derjenige Abschnitt, in dem nach der Herstellung des Behältnisses Blasluft wieder aus diesem entlassen wird.

Vorteilhaft werden diese besagten Messungen in einem vorgegebenen Zyklus untersucht, beispielsweise in einem Zyklus von 400 µs untersucht bzw. aufgezeichnet.

Bevorzugt wird die Abhängigkeit dieser Messgrößen von den oben beschriebenen Größen bzw. Parametern durch mathematische Verfahren abgebildet, wobei hierzu insbesondere eine Regressionsanalyse vorgenommen wird. Insbesondere erfolgt eine Abbildung dieser Abhängigkeit durch Polynome n-ter Ordnung, beispielsweise Polynome dritter, vierter oder fünfter Ordnung.

Bei einem weiteren bevorzugten Verfahren werden diese so ermittelten mathematischen Zusammenhänge in ein Softwaremodell bzw. eine Software - Lösung implementiert. Dieses kann dann bevorzugt in eine Maschinenvisualisierung integriert werden. Bevorzugt wird dann zur Maschinenlaufzeit der Maschinenbetreiber nach Berechnung der angegebenen Werte unterstützt. Damit wird jedoch bevorzugt eine entsprechende Berechnung bereits vor dem Produktionsstart vorgenommen. Es kann jedoch zusätzlich eine Anpassung der Berechnung während des Maschinenbetriebs und insbesondere während eines Produktionsbetriebs der Maschine vorgenommen werden.

Bei einem weiteren vorteilhaften Verfahren sind die Hauptprozessparameter aus einer Gruppe von Parametern ausgewählt, welche einen zeitlichen Beginn eines Vorblasens, einen zeitlichen Beginn eines Zwischenblasens, einen zeitlichen Beginn eines Fertigblasens, einen Vorblasdruck und einen Fertigblasdruck enthält. Bei diesen Werten könnte es sich auch um Initialwerte handeln, die anschließend von einer Regelung verfeinert und angepasst werden.

Bei einem weiteren bevorzugten Verfahren wird wenigstens ein Prozessparameter auf Basis wenigstens eines Messwertes und/oder Eingabewerts sowie bevorzugt auch unter Verwendung eines Polynoms n-ter Ordnung bestimmt. Bevorzugt handelt es sich hierbei um zeitabhängige Polynome.

Bei einem weiteren vorteilhaften Verfahren sind die Prozessparameter allgemein aus einer Gruppe von Prozessparametern ausgewählt, welche ein Ende des Zwischenblasvorgangs, einen Zwischenblasdruck, einen Beginn eines Fertigblasvorgangs, wenigstens einen Parameter für einen Rückgewinnungsregler zum Rückgewinnen von Blasluft und einen Entlastungsbeginn enthält. Bei den Parametern für einen Rückgewinnungsregler kann es sich beispielsweise um einen Anfangswert für einen Rückgewinnungsregler zum Rückgewinnen der Vorblasluft handeln. Dabei kann es sich beispielsweise um einen Druckwert handeln, ab dem ein Rückführen von Blasluft erfolgt. Auch kann es sich um einen zeitlichen Wert handeln, für den bzw. ab dem mit einer Rückführung begonnen wird. Weiterhin kann es sich bei dem Wert für einen Rückgewinnungsregler um einen Maximalwert handeln, d.h. einen Maximalwert, ab dem eine Rückgewinnung von Blasluft erfolgt.

Weiterhin kann es sich auch bei dem Wert für das Vorblasen um einen I-Faktor handeln, d.h. denjenigen Faktor, der den Verlauf der Druckrückführung steuert. Ebenso kann es sich bei dem Wert um Werte für das Zwischenblasen handeln und auch hier wieder - wie beschrieben - um den I-Faktor, einen Anfangswert und/oder einen Maximalwert.

Bei einem weiteren bevorzugten Verfahren werden die Prozessparameter mittels einer Visualisierungseinheit an den Benutzer ausgegeben. So kann beispielsweise ein Monitor vorgesehen sein, der eine Ausgabe von ermittelten Prozessparametern an den Benutzer ermöglicht. Auch wäre es möglich, dass diese so ermittelten Prozessparameter an eine Maschine übergeben werden. Vorteilhaft ist es jedoch denkbar, dass der Benutzer auch auf die so ermittelten Prozessparameter Einfluss nehmen kann.

Bei einem weiteren bevorzugten Verfahren werden die besagten Prozessparameter vor einem Produktionsbeginn der Vorrichtung ermittelt. Bevorzugt kann auf ein Einregeln der Prozessparameter verzichtet werden.

Dazu können aus den oben erwähnten Messdaten Näherungspolynome für den zeitlichen Druckverlauf in dem Behältnis abgeleitet werden. Aus diesen Näherungspolynomen sowie bevorzugt auch unter Berücksichtigung des pneumatischen Aufbaus einer bereits bestehenden Blasmaschine und/oder auch einer Streckblassequenz wird anschließend bevorzugt das Modell erstellt, welches die charakteristischen Werte eines Streckblasvorgangs abbildet.

Damit errechnet das oben erwähnte Modell aus den produktabhängigen konstanten Prozessparametern mit großem Einfluss, d.h. den Hauptprozessparametern, auf das Ergebnis diejenigen Prozessparameter, die kaum oder keinen Einfluss auf das Ergebnis des Streckblasvorgangs haben. Hierbei kann es sich beispielsweise um diejenigen Parameter handeln, welche das Recyceln von Blasluft beschreiben. Bevorzugt beinhalten daher die Nebenprozessparameter auch solche Parameter, die ein Recyceln von Blasluft beschreiben.

Die vorliegende Erfindung beruht weiterhin auf der Tatsache, dass das pneumatische System bei allen Maschinentypen im Wesentlichen identisch ist und so vorab und einmalig an einem Versuchsaufbau ermittelt werden kann. Auf diese Weise ergibt sich eine Vielzahl von Vorteilen gegenüber einem exklusiven Regelungsverfahren. Zunächst ist eine Regelung immer abhängig von der Messgenauigkeit, d.h. es muss stets sichergestellt sein, dass der Messwert korrekt ist und kein fehlerhafter Betriebszustand vorliegt. Weiterhin ist zur genauen Bestimmung der Prozessgrößen für den Streckblasprozess der Druck in dem Behältnis entscheidend. Dieser kann während der Produktion aber nicht gemessen werden.

Die Messung des Blasdrucks findet bevorzugt in einem Ventilblock statt. Es wurde jedoch ermittelt, dass dieser gemessene Druck insbesondere während der Druckänderungsphasen stark vom tatsächlichen Druck im Behältnis abweicht. Damit steht jedoch kein für die Ermittlung der Parameter notwendiger Druckwert im Stand der Technik zur Verfügung. Durch das hier beschriebene Verfahren stehen jedoch die ermittelten Parameter bereits vor Produktionsbeginn zur Verfügung. Der Bediener braucht daher keine Anfangswerte für die zu ermittelnden Parameter festlegen.

Weiterhin ist keine Produktion zur Einregelung der zu ermittelnden Parameter notwendig. Auf diese Weise können Produktionsphasen vermieden werden, in denen sich das Ergebnis durch den Regelungsprozess ändert und eventuell zu Ausschuss führt. Daneben benötigt der Regelungsprozess üblicherweise eine längere kontinuierliche Produktion ohne Änderung von Ausgangsparametern, in der sich die Regelgröße einschwingen kann.

Bei einem weiteren bevorzugten Verfahren werden die Prozessparameter zumindest teilweise vor einem Produktionsbeginn der Vorrichtung ermittelt. Bevorzugt werden die Prozessparameter zumindest teilweise vor einer ersten Inbetriebnahme der Maschine ermittelt. Dabei ist es möglich, dass die Prozessparameter wenigstens teilweise und bevorzugt wenigstens zeitweise außerhalb eines Betriebs der Maschine ermittelt werden. Daneben wäre es auch möglich, dass die Prozessparameter zunächst für eine Vielzahl an gleichartigen Maschinen ermittelt werden und bevorzugt erst bei einer Inbetriebnahme dieser Maschinen an diese Maschinen, insbesondere an Steuerungen dieser Maschinen übergeben werden.

Nach einer Änderung der Prozessparameter stehen die ermittelten Parameter sofort zur Verfügung. Dies gilt insbesondere während der ersten Einstellmaßnahmen eines neuen Produkts, bei dem die Prozessparameter sehr oft geändert werden. In diesen Fällen ist im Stand der Technik normalerweise eine längere Produktion notwendig, bis alle Regelgrößen eingeschwungen sind. Da dies mit dem beschriebenen Verfahren nicht notwendig ist, kann der Einschwingungsprozess erheblich verkürzt werden.

Bei einem weiteren bevorzugten Verfahren wird das beschriebene Modell derart erweitert, dass es sich selbstständig an eine Blasmaschine anpasst und auf diese Weise Alterungseinflüsse und maschinenspezifische Toleranzen kompensieren kann. Bevorzugt werden bei diesem Verfahren die Messwerte während der Produktion zur Laufzeit der Maschine ausgewertet und das Modell in kleinen Iterationsschritten angepasst. Auf diese Weise kann das vorab beschriebene Modell insbesondere auch an Erscheinungen, wie einer Alterung der Maschine, angepasst werden. Bevorzugt kann auch eine derartige Anpassung außerhalb des Betriebs erreicht werden, indem geänderte Messwerte zugeführt werden.

Bei einem weiteren bevorzugten Verfahren werden dem Maschinenmodell wenigstens zeitweise Messwerte zugeführt, welche für einen Betriebszustand der Vorrichtung charakteristisch sind. Diese Ausgestaltung des Verfahrens richtet sich insbesondere auf den Betrieb der Vorrichtung, also den Zeitraum nach der Inbetriebnahme. Hier ist es möglich, dass während des Betriebs Messwerte aufgenommen werden und diese wiederum dem Modell zugeführt werden. Auf Basis dieser Messwerte, welche sich beispielsweise alterungsbedingt ändern können, kann bevorzugt das Maschinenmodell angepasst werden. Dabei wäre es auch möglich, dass Änderungen dieser Messwerte erfasst werden.

Die vorliegende Erfindung ist weiterhin auf eine Maschinenanordnung gerichtet, welche eine Vorrichtung zum Umformen von Kunststoffvorformlingen zu Kunststoffbehältnissen aufweist, welche der Vorrichtung wiederum einen beweglichen Träger, an dem eine Vielzahl von Umformungsstationen zum Umformen der Kunststoffvorformlinge zu den Kunststoffbehältnissen angeordnet ist, aufweist. Weiterhin weisen diese Umformungsstationen jeweils Beaufschlagungseinrichtungen auf, welche die Kunststoffvorformlinge (insbesondere zu deren Expansion) mit einem gasförmigen Medium beaufschlagen. Weiterhin weist die Vorrichtung eine Steuerungseinrichtung auf, welche den Umformungsvorgang auf Basis einer Vielzahl von Prozessparametern steuert. Das gasförmige Medium, bei dem es sich insbesondere um Blasluft handelt, wird dabei insbesondere in einen Innenraum der Kunststoffvorformlinge eingeführt.

Erfindungsgemäß weist die Maschinenanordnung weiterhin ein unabhängig von der Vorrichtung betreibbares Maschinenmodell auf, mit dem eine Vielzahl der Prozessparameter anhand dieses Maschinenmodells ermittelbar ist, wobei diesem Maschinenmodell eine vorgegebene Anzahl an Eingabeparametern übergebbar ist und wenigstens eine Prozessoreinheit auf Basis dieser Eingabeparameter die Prozessparameter und/oder für diese Prozessparameter charakteristische Werte ermittelt. Bevorzugt handelt es sich bei der Vorrichtung um eine Blasformmaschine und insbesondere um eine Streckblasmaschine. Es wird daher auch vorrichtungsseitig vorgeschlagen, dass ein Modell vorhanden ist, an dem oder mittels dessen die jeweiligen Prozessparameter ermittelt werden können.

Unter einem unabhängig von der Maschinenanordnung bzw. der Vorrichtung betreibbaren Maschinenmodell wird dabei insbesondere verstanden, dass dieses unabhängig von einem Betriebszustand der Vorrichtung betreibbar ist und insbesondere auch unabhängig davon, ob diese Vorrichtung bereits in Betrieb genommen wurde. Daneben ist es jedoch auch denkbar, dass während des Betriebs der Maschine Werte wie insb. Messwerte an das Modell übergeben werden und das Modell auch diese Werte berücksichtigt.

Bei einer weiteren vorteilhaften Ausführungsform weist die Vorrichtung zum Umformen der Kunststoffvorformlinge zu Kunststoffbehältnissen auch eine Erwärmungseinrichtung auf, welche zum Erwärmen von Kunststoffvorformlingen dient. Auch deren Parameter, wie beispielsweise eine Heizleistung von Erwärmungseinrichtungen oder eine Rotationsgeschwindigkeit der Kunststoffvorformlinge während der Erwärmung können in den hier beschriebenen Berechnungsprozess mit einfließen. Bevorzugt weist die Maschinenanordnung auch eine Anzeigeeinrichtung auf, mittels derer Prozessparameter und andere Werte ausgegeben werden können.

Weitere Vorteile und Ausführungsformen ergeben sich aus den beigefügten Zeichnungen:
Darin zeigen:
- Figur 1: eine grob schematische Darstellung einer erfindungsgemäßen Vorrichtung;
- Figur 2: eine Darstellung zur Veranschaulichung des erfindungsgemäßen Verfahrens;
- Figuren 3a-d: vier Darstellungen zur Veranschaulichung eines Ablaufes eines erfindungsgemäßen Verfahrens; und
- Fig. 4: eine Darstellung eines weiteren vorteilhaften Verfahrens.

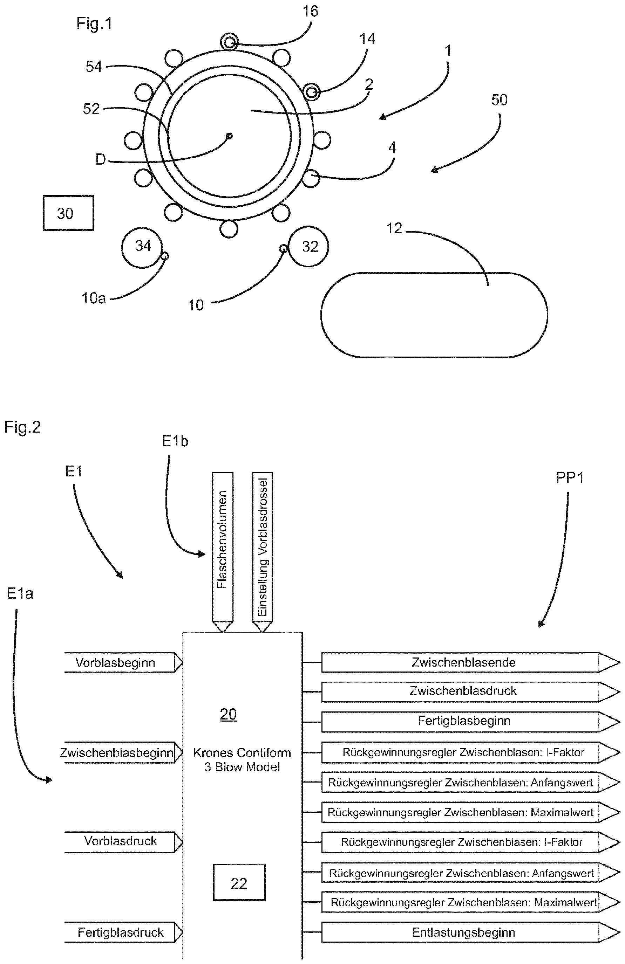

Figur 1 zeigt eine grob schematische Darstellung einer Blasformmaschine 1. Diese Maschine weist einen um eine Drehachse D drehbaren Träger 2 (ein sog. Blasrad) auf, an dem eine Vielzahl von Umformungsstationen 4 zum Umformen von Kunststoffvorformlingen 10 zu Kunststoffbehältnissen 10a angeordnet ist. Diese Umformungsstationen 4 weisen dabei jeweils Reckstangen 14 (nur eine gezeigt) auf, mit deren Hilfe die Kunststoffvorformlinge 10 in ihrer Längsrichtung gedehnt werden können. Die Bewegung dieser Reckstangen wird durch Antriebseinrichtungen, wie etwa Linearmotoren, bewirkt. Daneben wäre es auch denkbar, dass eine Führungskurve vorgesehen ist, welche die Bewegung der Reckstange bewirkt.

Daneben weisen die Umformungsstationen 4 auch jeweils Beaufschlagungseinrichtungen 16, wie beispielsweise Blasdüsen (nur eine dargestellt) auf, welche die Kunststoffvorformlinge 10 zu deren Expansion mit dem gasförmigen Medium wie insbesondere Blasluft beaufschlagen. Diese Blasluft kann beispielsweise mittels Reservoirs wie etwa Ringkanälen 52, 54 zur Verfügung gestellt werden, welche die einzelnen Umformungsstationen 4 mit Blasluft versorgen. Bevorzugt weisen die einzelnen Umformungsstationen 4 auch jeweils Ventileinrichtungen auf, welche die Zufuhr der Blasluft an die Kunststoffvorformlinge 10 steuern. Diese Ventileinrichtungen können dabei in Ventilblocks angeordnet sein.

Das Bezugszeichen 30 kennzeichnet eine Steuerungseinrichtung, welche zur Steuerung der Vorrichtung dient. Dieser Steuerungseinrichtung können dabei Parameter von dem oben beschriebenen Maschinenmodel zur Verfügung gestellt werden. Auch können die einzelnen Umformungsstationen jeweils Steuerungen aufweisen. Dabei wäre es möglich, dass die Steuerungseinrichtung 30 diese Steuerungen der einzelnen Umformungsstationen wiederum (etwa als Master-Steuerung) ansteuert.

Das Bezugszeichen 12 kennzeichnet grob schematisch eine Heizeinrichtung bzw. einen Ofen, der die Kunststoffvorformlinge 10 erwärmt. Dabei wäre es möglich, dass das oben beschriebene Maschinenmodell auch Parameter dieser Heizeinrichtung 12 ermittelt. Das Bezugszeichen 32 bezieht sich auf eine Zuführeinrichtung, wie etwa einen Zuführstern, um den Umformungsstationen die Kunststoffvorformlinge 10 zuzuführen und das Bezugszeichen 34 auf eine Abführeinrichtung wie etwa einen Abführstern, um die geblasenen Behältnisse 10a abzuführen. Das Bezugszeichen 50 bezieht sich auf die gesamte Maschinenanordnung. Figur 2 zeigt eine grob schematische Darstellung zur Veranschaulichung eines erfindungsgemäßen Verfahrens. Dabei bezieht sich das Bezugszeichen 20 auf ein nur schematisch dargestelltes Rechenmodul bzw. ein (Maschinen)Modell einer Blasformmaschine. Diesem mathematischen Modell werden Eingabewerte E1 zugeführt. Dabei bezeichnet das Bezugszeichen E1a die Hauptprozessparameter und das Bezugszeichen E1b Behältnis - Parameter. Die dargestellten Hauptprozessparameter d. h. der Vorblasbeginn, der Zwischenblasbeginn, ein Vorblasdruck und ein Fertigblasdruck stellen wesentliche Parameter bzw. Größen dar, welche die Qualität des so hergestellten Behältnisses bestimmen. Die Eingabewerte E1b sind für das expandierende Behältnis charakteristisch.

Das Bezugszeichen 22 kennzeichnet eine Prozessoreinheit welche die Berechnung der einzelnen Parameter, insbesondere der Prozessparameter durchführt. Diese Prozessoreinheit kann dabei eine oder mehrere Berechnungseinrichtungen aufweisen wie etwa Additionsglieder, Subtraktionsglieder, Multiplikationsglieder, Polynomlöser und dergleichen.

Auf Basis dieser Werte berechnet das Modell weitere Werte, genauer Prozessparameter PP1, welche auf das zu herzustellende Behältnis keinen oder geringen Einfluss haben, wie beispielsweise - wie in Figur 2 gezeigt - ein Zwischenblasende, ein Zwischenblasdruck und ein Fertigblasbeginn. Die Weiteren Prozessparameter beziehen sich größten Teils auf das Recycling von Blasluft, d. h. ein Recyclingregler, der sich auf den Vorblasvorgang bezieht und einen Recyclingregler der sich auf das Zwischenblasen bezieht. Dabei wird darauf hingewiesen, dass der Vorblasdruck üblicherweise geringer ist als der Zwischenblasdruck und der Zwischenblasdruck üblicherweise geringer als der Fertigblasdruck.

Zum Zwecke des Recyclings kann in ein Reservoir, welches den Zwischenblasdruck vorhält, Blasluft zurückgeführt werden und auch in ein Reservoir, welches den Vorblasdruck vorhält. Zu den jeweils ermittelten Werten gehören - wie in Figur 2 gezeigt - der jeweilige I-Faktor, ein Anfangswert sowie ein Maximalwert, die jeweils für den Vorblasvorgang bzw. den Zwischenblasvorgang charakteristisch sind. Diese Werte haben keinen Einfluss auf die Herstellung der Behältnisse sondern auf die Energieeffizienz der Anlage, die auch durch die Effizienz des Recycelns von Druckluft zum Tragen kommt.

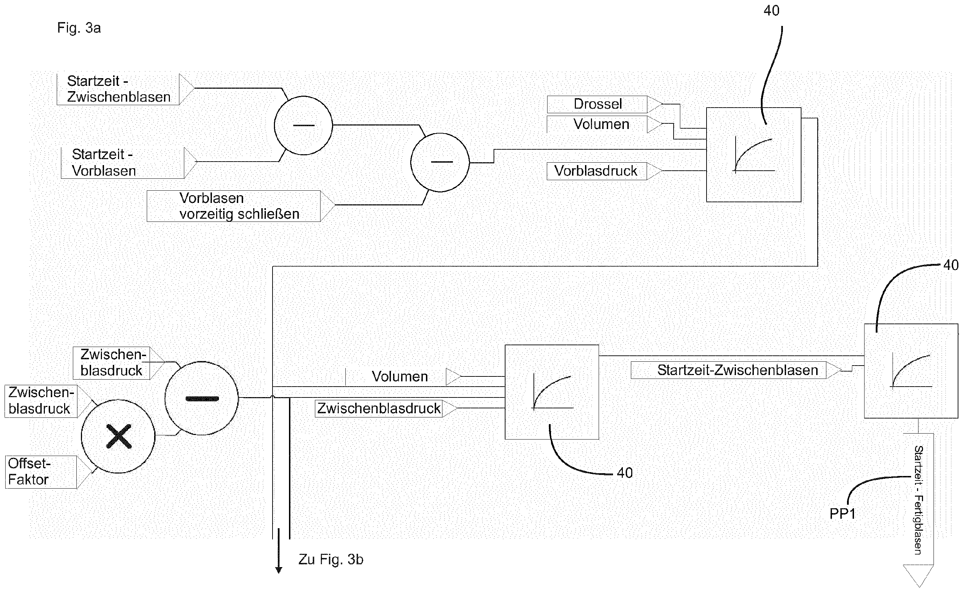

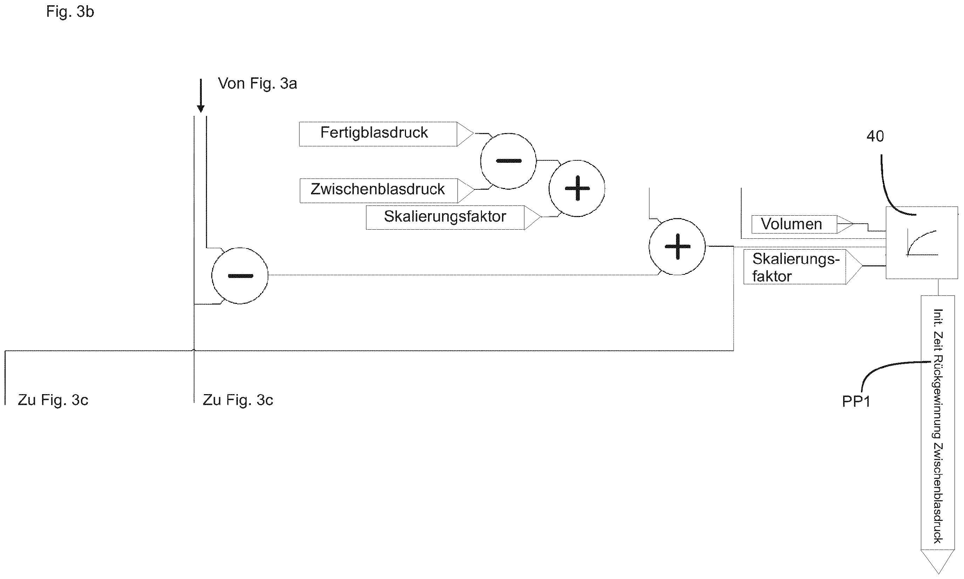

Die Figuren 3a - 3d veranschaulichen die Ermittlung der einzelnen Parameter. Es wird darauf hingewiesen, dass die Figuren 3a - 3c als zusammengehörig anzusehen sind bzw. Teile einer Gesamtdarstellung sind. Die Übergänge zwischen den Figuren sind jeweils gekennzeichnet.

Wie in Figur 3a gezeigt, werden eine Startzeit für das Zwischenblasen sowie eine Startzeit für das Vorblasen vorgegeben und dabei die Startzeit für das Vorblasen von der Startzeit für das Zwischenblasen subtrahiert. Bei diesen beiden Werten handelt es sich, wie sich auch aus Figur 2 ergibt, um Hauptprozessparameter. Von dieser Differenzzeit kann wiederum ein Wert, der sich auf ein vorzeitiges Schließen des Vorblasens bezieht, abgezogen werden. Diese Werte werden wiederum gemeinsam mit einem Wert, der eine Drosseleinstellung charakterisiert, dem Behältnisvolumen und einem Vorblasdruck, der ebenfalls ein Hauptprozessparameter ist, einer Berechnungseinrichtung 40, hier einem Polynomlöser, zugeführt.

Diese ermittelt hieraus letztlich wiederum unter Berücksichtigung des Behältnisvolumens und des Zwischenblasdrucks eine Startzeit für ein Fertigblasen, wobei hier als weiterer Parameter wiederum eine Startzeit für das Zwischenblasen verwendet wird. Zur Berechnung werden wieder zwei Berechnungseinrichtungen 40 in Form von Polynomlösern verwendet. Hierzu wird der Zwischenblasdruck berücksichtigt sowie auch ein Offset-Faktor.

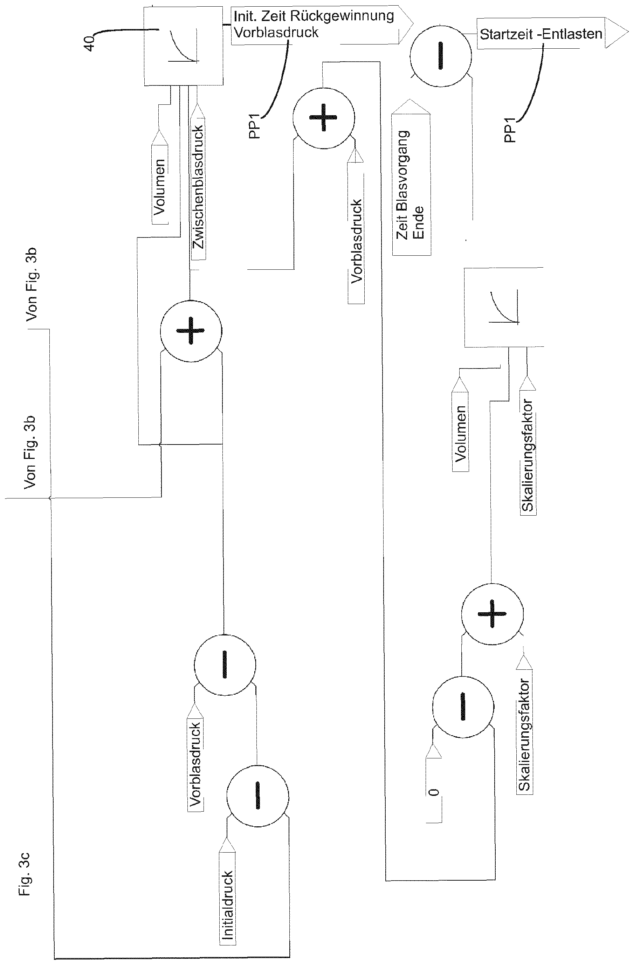

Daneben wird der so ermittelte Wert auch verwendet, um über eine weitere Berechnung z.B. die Startzeit für das Recyceln des Zwischenblasdrucks zu ermitteln. Es wird darauf hingewiesen, dass die in den Figuren 3a - 3c gezeigte Darstellung lediglich beispielhaft zu verstehen ist. Wie sich aus Figur 3c ergibt, kann wiederum unter Verwendung des Vorblasdruckes und des Initialdruckes die Initialzeit für die Rückgewinnung des Vorblasdruckes ermittelt werden sowie auch die Startzeit für ein Entlasten des Behältnisses. Bei diesen Werten handelt es sich um die Prozessparameter PP1. Man erkennt, dass zur Berechnung zahlreiche Subtraktionen bzw. Additionen durchgeführt werden und zum Teil auch Skalierungsfaktoren mit berücksichtigt werden.

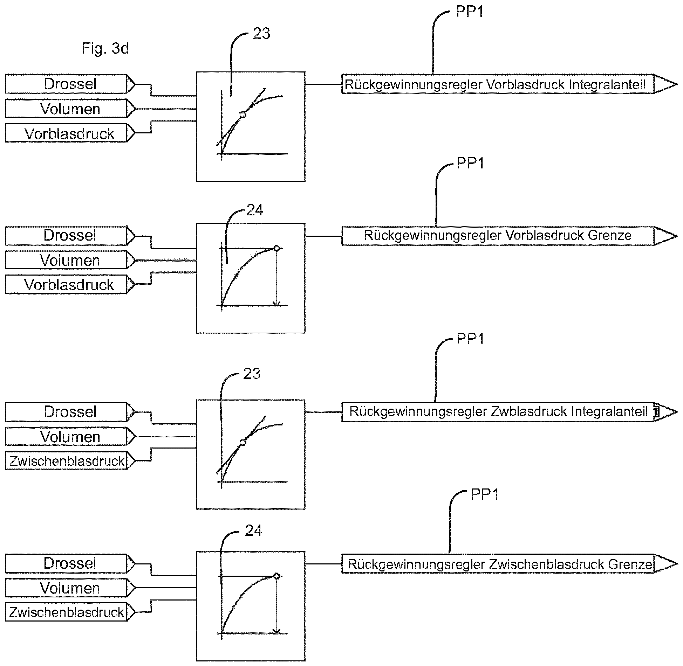

Figur 3d veranschaulicht die Ermittlung der Werte für den Rückgewinnungsregler des Vorblasdruckes und den Rückgewinnungsregler für den Zwischenblasdruck d. h. jeweils die Integralanteile sowie die Grenzen. Zur Ermittlung dieser Werte werden jeweils wieder die Drosselwerte, die Volumenwerte sowie der Vorblasdruck bzw. der Zwischenblasdruck verwendet.

Das beispielsweise in Figur 3a gezeigte Bezugszeichen 40 bezieht sich auf einen Polynomlöser. Dieser Polynomlöser enthält die das pneumatische System der der Blasmaschine beschreibenden Polynome. Anhand von Randbedingungen sowie einer Skalierung, wie einer Y-Skalierung und einem Schwellwert können bestimmte Punkte auf dem Graphen des Polynoms gesucht und ausgegeben werden.

Das Bezugszeichen 23 in Figur 3d kennzeichnet bzw. beschreibt die Berechnung des Integralfaktors. Dabei sind auch hier die das pneumatische System der Blasmaschine beschreibende Polynome vorhanden bzw. zugrunde gelegt. Anhand von Lösungsformeln werden die für das Betragsoptimum eines I-Reglers benötigten Integralanteile berechnet.

Das Bezugszeichen 24 in Fig. 3d kennzeichnet die Berechnung eines Maximalwertes. Auch hier sind die als pneumatisches System der Blasmaschine enthaltenen Polynome zugrunde gelegt. Auf Basis dieses Polynoms wird der einem Schwellwert zugeordnete Zeitwert bestimmt.

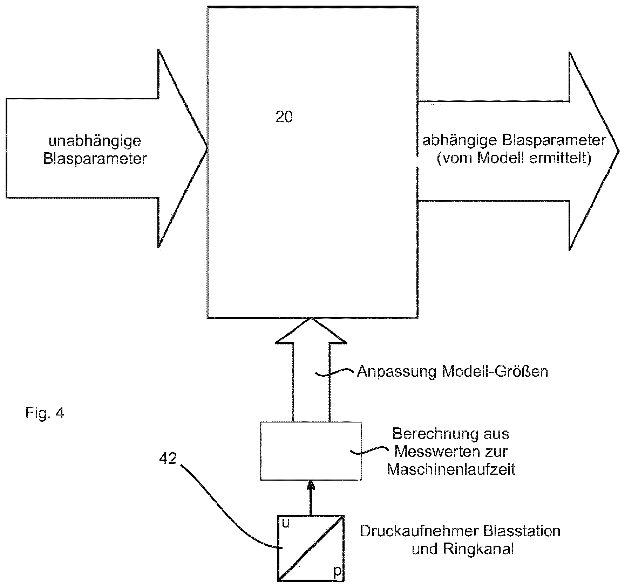

Figur 4 zeigt eine weitere Darstellung zur Veranschaulichung der Berechnung. Auch hier wird wieder das mathematische (Maschinen)modell 20 zugrunde gelegt. Diesem Modell werden unabhängige Blasparameter, insbesondere von einem Benutzer, eingegeben. Weiterhin werden, insb. zur Maschinenlaufzeit Messwerte aufgenommen beispielsweise über einen Druckaufnehmer von den einzelnen Blasstationen oder einem Ringkanal. Ausgehend von diesen Messwerten, welche beispielsweise für eine Alterung der Maschine charakteristisch sein können, wird eine Anpassung von Modellgrößen vorgenommen und diese angepassten Modellgrößen dem (Maschinen)modell 20 zugeführt.

In Abhängigkeit von diesen angepassten Modellgrößen gibt das Modell nunmehr abhängige Blasparameter aus, welche von dem Modell ermittelt werden konnten. Damit wird wie in Figur 4 gezeigt, das mathematische Modell so erweitert, das es auch selbstständig sich an die Blasmaschine anpasst und so insbesondere Alterungseinflüsse und Maschinenspezifische Toleranzen kompensiert. Bevorzugt wäre es doch auch möglich, dass auch diese Berechnung außerhalb eines Maschinenbetriebs vorgenommen wird. Allerdings basiert diese Berechnung wiederum bevorzugt auf Messungen, die an der realen Maschine vorgenommen wurden. Bevorzugt wird damit mithilfe dieser Messerwerte das mathematische Modell selbst angepasst bzw. bevorzugt auch auf die gerade betriebene Maschine individualisiert.

Damit wird in Figur 4 auch eine Möglichkeit beschrieben, mit der zusätzlich zu den oben erwähnten Eingabewerten auch für die Maschine spezifische Werte berücksichtigt werden, welche deren Alterung berücksichtigen. Auch hier kann die Berechnung wieder unter Zugrundelegung der oben erwähnten Polynome erfolgen, beruhen aber nicht mehr bzw. nicht mehr nur auf Vorgabewerten einer Modellmaschine sondern auf tatsächlich ermittelten Werten aus dem laufenden Betrieb der zu betreibenden Maschine.

Besonders bevorzugt werden also einem weiteren Verfahrensschritt auch an der reellen Maschine aufgenommene Messwerte verwendet, um Blasparameter auszugeben bzw. zu modifizieren. Besonders bevorzugt werden damit die genannten Messwerte verwendet, um das Maschinenmodell anzupassen.

### Bezugszeichenliste

- 1: Vorrichtung
- 2: Träger
- 4: Umformungsstation
- 10: Kunststoffvorformling
- 10a: Kunststoffbehältnis
- 12: Heizeinrichtung
- 14: Reckstange
- 16: Beaufschlagungseinrichtung
- 20: Maschinenmodell, Rechenmodell
- 22: Prozessoreinheit
- 23: Berechnung des Integralfaktors
- 24: Berechnung des Maximalwertes
- 30: Steuerungseinrichtung
- 32: Zuführeinrichtung
- 34: Abführeinrichtung
- 40: Berechnungseinrichtung
- 50: Maschinenanordnung
- 52, 54: Ringkanal

- E1: Eingabewerte
- E1a: Hauptprozessparameter
- E1b: Behältnis Parameter
- PP1: Prozessparameter
- D: Drehachse

## Patentansprüche

1. Verfahren zum Betreiben einer Vorrichtung (1) zum Umformen von Kunststoffvorformlingen (10) zu Kunststoffbehältnissen (10a), wobei diese Vorrichtung Kunststoffvorformlinge (10) mit einem fließfähigen Medium beaufschlagt, um diese Kunststoffvorformlinge (10) zu den Kunststoffbehältnissen (10a) zu expandieren, wobei die Vorrichtung (1) diesen Umformungsvorgang unter Berücksichtigung einer Vielzahl von Prozessparametern (PP1) durchführt,
**dadurch gekennzeichnet, dass**
die Vielzahl der Prozessparameter (PP1) anhand eines Maschinenmodells (20) ermittelt werden, wobei diesem Maschinenmodell (20) eine vorgegebene Anzahl an Eingabeparametern (E1) übergeben wird und wenigstens eine Prozessoreinheit (22) auf Basis dieser Eingabeparameter (E1) die Prozessparameter (PP1) und/oder für diese Prozessparameter charakteristische Werte ermittelt, wobei die Eingabeparameter (E1) Hauptprozessparameter (E1a) enthalten, welche den Streckblasvorgang beschreiben, und weiter wobei die Hauptprozessparameter aus einer Gruppe von Parametern ausgewählt sind, welche einen zeitlichen Beginn eines Vorblasens, einen zeitlichen Beginn eines Zwischenblasens, einen zeitlichen Beginn eines Fertigblasens, einen Vorblasdruck und einen Fertigblasdruck enthält, wobei es sich um Initialwerte handelt, die anschließend von einer Regelung verfeinert und angepasst werden.

2. Verfahren nach Anspruch 1,
**dadurch gekennzeichnet, dass**
die Eingabeparameter (E1) Behältnisparameter (E1b) enthalten, welche für die zu expandierenden Kunststoffvorformlinge und/oder die herzustellenden Kunststoffbehältnisse charakteristisch sind.

3. Verfahren nach wenigstens einem der vorangegangenen Ansprüche,
**dadurch gekennzeichnet, dass**
die Prozessoreinheit auf Basis der Eingabeparameter (E1) Nebenprozessparameter ermittelt, welche ebenfalls den Streckblasvorgang beschreiben.

4. Verfahren nach wenigstens einem der vorangegangenen Ansprüche,
**dadurch gekennzeichnet, dass**
wenigstens ein Prozessparameter auf Basis wenigstens eines Messwerts sowie unter der Verwendung eines Polynoms n-ter Ordnung bestimmt wird.

5. Verfahren nach wenigstens einem der vorangegangenen Ansprüche,
**dadurch gekennzeichnet, dass**
die Prozessparameter (PP1) wenigstens teilweise vor einem Produktionsbeginn der Vorrichtung (1) ermittelt werden.

6. Verfahren nach wenigstens einem der vorangegangenen Ansprüche,
**dadurch gekennzeichnet, dass**
dem Maschinenmodell (20) wenigstens zeitweise Messwerte zugeführt werden, welche für einen Betriebszustand der Vorrichtung (1) charakteristisch sind.

7. Maschinenanordnung (50) mit einer Vorrichtung (1) zum Umformen von Kunststoffvorformlingen (10) zu Kunststoffbehältnissen (10a), welche einen beweglichen Träger (2), an dem eine Vielzahl von Umformungsstationen (4) zum Umformen der Kunststoffvorformlinge (10) zu den Kunststoffbehältnissen (10a) angeordnet ist, aufweist, wobei diese Umformungsstationen (4) jeweils Beaufschlagungseinrichtungen (16) aufweisen, welche die Kunststoffvorformlinge (10) mit einem gasförmigen Medium beaufschlagen und wobei die Vorrichtung (1) eine Steuerungseinrichtung (30) aufweist, welche den Umformungsvorgang auf Basis einer Vielzahl von Prozessparametern (PP1) steuert,
**dadurch gekennzeichnet, dass**
die Maschinenanordnung (50) weiterhin ein unabhängig von der Vorrichtung (1) betreibbares Maschinenmodell (20) aufweist, wobei die Vielzahl der Prozessparameter anhand dieses Maschinenmodells (20) ermittelbar ist, wobei diesem Maschinenmodell eine vorgegebene Anzahl an Eingabeparametern (E1) übergebbar ist und wenigstens eine Prozessoreinheit (22) auf Basis dieser Eingabeparameter (E1) die Prozessparameter (PP1) und/oder für diese Prozessparameter charakteristische Werte ermittelt, wobei die Eingabeparameter (E1) Hauptprozessparameter (E1a) enthalten, welche den Streckblasvorgang beschreiben, und weiter wobei die Hauptprozessparameter aus einer Gruppe von Parametern ausgewählt sind, welche einen zeitlichen Beginn eines Vorblasens, einen zeitlichen Beginn eines Zwischenblasens, einen zeitlichen Beginn eines Fertigblasens, einen Vorblasdruck und einen Fertigblasdruck enthält, wobei es sich um Initialwerte handelt, die anschließend von einer Regelung verfeinert und angepasst werden.

## Claims

1. Method for operating an apparatus (1) for transforming plastic preforms (10) into plastic containers (10a), wherein this apparatus acts upon a flowable medium to plastic preforms (10) in order to expand these plastic preforms (10) to form the plastic containers (10a), wherein the apparatus (1) carries out this transforming operation while taking account of a plurality of process parameters (PP1),
**characterized in that**
the plurality of process parameters (PP1) is determined on the basis of a machine model (20), wherein a predefined number of input parameters (E1) are transferred to this machine model (20) and at least one processor unit (22) determines the process parameters (PP1) and/or values characteristic of these process parameters on the basis of these input parameters (E1), wherein the input parameters (E1) include main process parameters (E1a) which describe the stretch blow moulding process, and further wherein the main process parameters are selected from a group of parameters which include a start time of pre-blowing, a start time of intermediate blowing, a start time of finish-blowing, a pre-blowing pressure and a finish-blowing pressure, wherein these values are initial values which are then refined and adapted by a control.

2. Method according to claim 1,
**characterized in that**
the input parameters (E1) include container parameters (E1b) which are characteristic of the plastic preforms to be expanded and/or of the plastic containers to be produced.

3. Method according to at least one of the preceding claims,
**characterized in that**
the processor unit determines, on the basis of the input parameters (E1), auxiliary process parameters which also describe the stretch blow moulding operation.

4. Method according to at least one of the preceding claims,
**characterized in that**
at least one process parameter is determined on the basis of at least one measured value and using an nth degree polynomial.

5. Method according to at least one of the preceding claims,
**characterized in that**
the process parameters (PP1) are at least partially determined prior to a production start of the apparatus (1).

6. Method according to at least one of the preceding claims,
**characterized in that**
measured values which are characteristic of an operating state of the apparatus (1) are supplied to the machine model (20) at least at times.

7. Machine arrangement (50) comprising an apparatus (1) for transforming plastic preforms (10) into plastic containers (10a), which has a movable carrier (2), on which a plurality of transforming stations (4) for transforming the plastic preforms (10) into the plastic containers (10a) are arranged, wherein these transforming stations (4) each have stressing devices (16) which act upon a gaseous medium to the plastic preforms (10), and wherein the apparatus (1) has a control device (30) which controls the transforming operation on the basis of a plurality of process parameters (PP1),
**characterized in that**
the machine arrangement (50) also has a machine model (20) which is operatable independently of the apparatus (1), wherein the plurality of process parameters is determinable on the basis of this machine model (20), wherein a predefined number of input parameters (E1) is transferable to this machine model and at least one processor unit (22) determines the process parameters (PP1) and/or values characteristic of these process parameters on the basis of these input parameters (E1), wherein the input parameters (E1) include main process parameters (E1a) which describe the stretch blow moulding process, and further wherein the main process parameters are selected from a group of parameters which include a start time of pre-blowing, a start time of intermediate blowing, a start time of finish-blowing, a pre-blowing pressure and a finish-blowing pressure, wherein these values are initial values which are then refined and adapted by a control.

## Revendications

1. Procédé de fonctionnement d'un dispositif (1) pour la transformation de préformes en plastique (10) en récipients en plastique (10a), dans lequel ce dispositif charge des préformes en plastique (10) avec un agent fluide pour expanser ces préformes en plastique (10) en récipients en plastique (10a), dans lequel le dispositif (1) effectue cette opération de transformation en tenant compte d'une pluralité de paramètres de processus (PP1),
**caractérisé en ce que**
la pluralité des paramètres de processus (PP1) sont déterminée à l'aide d'un modèle de machine (20), dans lequel un nombre prédéfini de paramètres de saisie (E1) est transféré à ce modèle de machine (20) et au moins une unité de processeur (22) détermine, sur la base de ces paramètres de saisie (E1), les paramètres de processus (PP1) et/ou des valeurs caractéristiques pour ces paramètres de processus, dans lequel les paramètres de saisie (E1) contiennent des paramètres de processus principaux (E1a), lesquels décrivent l'opération d'étirage-soufflage, et en outre dans lequel les paramètres de processus principaux sont sélectionnés dans un groupe de paramètres, lequel contient un début temporel d'un présoufflage, un début temporel d'un soufflage intermédiaire, un début temporel d'un soufflage final, une pression de présoufflage et une pression de soufflage final, dans lequel il s'agit de valeurs initiales qui sont ensuite affinées et adaptées par un régulateur.

2. Procédé selon la revendication 1,
**caractérisé en ce que**
les paramètres de saisie (E1) contiennent des paramètres de récipient (E1b), lesquels sont caractéristiques pour les préformes en plastique à expanser et/ou les récipients en plastique à fabriquer.

3. Procédé selon au moins l'une quelconque des revendications précédentes,
**caractérisé en ce que**
l'unité de processeur détermine, sur la base des paramètres de saisie (E1), des paramètres de processus auxiliaires, lesquels décrivent également l'opération d'étirage-soufflage.

4. Procédé selon au moins l'une quelconque des revendications précédentes,
**caractérisé en ce que**
au moins un paramètre de processus est déterminé sur la base d'au moins une valeur de mesure ainsi qu'en utilisant un polynôme d'ordre n.

5. Procédé selon au moins l'une quelconque des revendications précédentes,
**caractérisé en ce que**
les paramètres de processus (PP1) sont déterminés au moins en partie avant un début de production du dispositif (1).

6. Procédé selon au moins l'une quelconque des revendications précédentes,
**caractérisé en ce que**
des valeurs de mesure au moins temporaires, lesquelles sont caractéristiques pour un état de fonctionnement du dispositif (1), sont fournies au modèle de machine (20).

7. Agencement de machine (50) avec un dispositif (1) pour la transformation de préformes en plastique (10) en récipients en plastique (10a) lequel présente un support mobile (2), au niveau duquel une pluralité de stations de transformation (4) pour la transformation des préformes en plastique (10) en récipients en plastique (10a) est agencé, dans lequel ces stations de transformation (4) présentent respectivement des dispositifs de chargement (16), lesquels chargent les préformes en plastique (10) avec un agent gazeux et dans lequel le dispositif (1) présente un dispositif de commande (30), lequel commande l'opération de transformation sur la base d'une pluralité de paramètres de processus (PP1),
**caractérisé en ce que**
l'agencement de machine (50) présente en outre un modèle de machine (20) pouvant fonctionner indépendamment du dispositif (1), dans lequel la pluralité des paramètres de processus peut être déterminée à l'aide de ce modèle de machine (20), dans lequel un nombre prédéfini de paramètres de saisie (E1) peut être transféré à ce modèle de machine et au moins une unité de processeur (22) détermine, sur la base de ces paramètres de saisie (E1), les paramètres de processus (PP1) et/ou des valeurs caractéristiques pour ces paramètres de processus, dans lequel les paramètres de saisie (E1) contiennent des paramètres de processus principaux (E1a), lesquels décrivent l'opération d'étirage-soufflage, et en outre dans lequel les paramètres de processus principaux sont sélectionnés dans un groupe de paramètres, lequel contient un début temporel d'un présoufflage, un début temporel d'un soufflage intermédiaire, un début temporel d'un soufflage final, une pression de présoufflage et une pression de soufflage final, dans lequel il s'agit de valeurs initiales qui sont ensuite affinées et adaptées par un régulateur.
